# EUROPEAN PATENT APPLICATION

(11) **EP 2 684 911 A1**
(43) Date of publication of application: **15.01.2014**
(21) Application number: 11860223.4
(22) Date of filing: 22.12.2011
(51) Int. Cl.: C08J 11/14, B01J 3/00, C08J 11/16

(54) **EPOXY RESIN HARDENED MATERIAL AND DECOMPOSITION METHOD FOR SAME**

(30) Priority: 08.03.2011 JP 2011050699; 08.03.2011 JP 2011050700
(71) Applicant: Panasonic Corporation, Kadoma-shi Osaka 571-8501 (JP)
(72) Inventor: OHIRA, Hiroki, Osaka 540-6207 (JP); MATSUGI, Shin, Osaka 540-6207 (JP)
(74) Representative: Müller-Boré & Partner Patentanwälte
(86) International application number: PCT/JP2011/079829
(87) International publication number: WO 2012/120752

(57) **Abstract**

There is provided a method for decomposing a cured epoxy resin, the method being capable of decomposing a cured epoxy resin containing silica efficiently. A cured epoxy resin containing silica is decomposed by being brought into contact with subcritical water including at least one alkaline compound selected from an alkaline metal salt and an alkaline metal hydroxide.

## Description

### Technical Field

The present invention relates to a method for decomposing a cured epoxy resin.

### Background Art

Epoxy resins among plastics exhibit excellent electrical insulating properties, heat resistance, and mechanical strength and therefore have been used widely as materials for electric/electronic components, automotive components, and so on after being mixed with an inorganic filler such as silica and an additive such as a curing agent, cured, and then molded. However, a cured epoxy resin having once been cured is not decomposed easily because the cured epoxy resin is a thermosetting resin and contains a large amount of an inorganic filler and therefore it is neither softened nor melted by heat and is hardly soluble in solvents. For this reason, the only reliable way of the disposal thereof is landfill, and problems such as securement of a disposal site and the load on the environment are of concern.

Examples of methods for decomposing a cured epoxy resin that have been reported to date include a method for decomposing a cured epoxy resin using subcritical water having a base concentration of 2% or less as a reaction solvent (for example, JP-A-10-242747).

However, the decomposition method described above is a decomposition method premised on the recycling of resin components in a cured epoxy resin and further premised on the recycling of inorganic fillers in the cured epoxy resin, and the collective decomposition of both the resin components and the inorganic fillers has not been studied. That is, in the above-described decomposition method, the inorganic filler in the cured epoxy resin is not changed in its form and simultaneously the resin components in the cured epoxy resin are depolymerized, so that both the materials are classified and separated, and the resin component is recovered in the form of a low molecular weight compound and the inorganic filler is recovered in its original form. A base has been included in subcritical water and this is for the purpose of promoting the decomposition of resin components, but neither the contribution of a base to the decomposition (dissolution) of an inorganic filler nor the specific type of a base is disclosed.

### Citation List

• Patent Document 1: JP-A-10-242747

### Summary of Invention

### Technical Problem

The present invention was devised in light of the above-described situations and an object thereof is to provide a method for decomposing a cured epoxy resin, the method being capable of efficiently decomposing a cured epoxy resin containing silica.

### Solution to Problem

In order to achieve the above-described object, the method for decomposing a cured epoxy resin of the present invention includes bringing a cured epoxy resin containing silica into contact with subcritical water to decompose the resin, the subcritical water including at least one alkaline compound selected from an alkaline metal salt and an alkaline metal hydroxide.

In the present invention, the amount of the alkaline compound added is preferably 0.2 parts by weight or more relative to 1 part by weight of the cured epoxy resin.

In the present invention, the alkaline metal hydroxide is preferably sodium hydroxide or potassium hydroxide.

Furthermore, in the present invention, the cured epoxy resin is preferably brought into contact with subcritical water of 200 to 350°C.

### Advantageous Effects of Invention

According to the present invention, the cured epoxy resin containing silica can be decomposed efficiently.

### Brief Description of Drawings

Fig. 1 is a schematic diagram of a process flow illustrating one example of subcritical water treatment in the method for decomposing a cured epoxy resin of the present invention;
Fig. 2 is a schematic diagram of a process flow illustrating another example of subcritical water treatment in the method for decomposing a cured epoxy resin of the present invention; and
Fig. 3 is a flowchart illustrating one example of a method for recovering a metal using the method for decomposing a cured epoxy resin of the present invention.

### Description of Embodiments

The present invention is described in detail below with reference to the drawings and the like.

The method for decomposing a cured epoxy resin of the present invention includes bringing a cured epoxy resin containing silica into contact with subcritical water to decompose the resin, the subcritical water including at least one alkaline compound selected from an alkaline metal salt and an alkaline metal hydroxide.

In the present invention, a cured epoxy resin refers to a thermosetting resin resulting from crosslinked network formation with a curing agent in a resin having an epoxy group in its molecule, and the resin and the curing agent each may be of any type. Examples of the resin include bisphenol type epoxy resins such as bisphenol A type epoxy resins and bisphenol F type epoxy resins, cresol novolac type epoxy resins such as o-cresol novolac type epoxy resins, biphenyl type epoxy resins, and dicyclopentadiene type epoxy resins. Examples of the curing agent include acid anhydride type curing agents such as hexahydrophthalic anhydride, tetrahydrophthalic anhydride, and pyromellitic anhydride, amine type curing agents such as diaminodiphenylmethane and metaphenylenediamine, and phenol type curing agents such as phenol novolac resins.

In the cured epoxy resin, silica is incorporated as an inorganic filler. Silica is used for the purposes of achieving low thermal expansion, improving workability, and reducing the cost of raw materials. For example, silica may be incorporated in a proportion of 40 to 95% by mass of the overall amount of the cured epoxy resin.

Examples of the type of silica include fused silica, crystalline silica, and finely divided silica. The particle diameter and the incorporation amount of silica are not particularly limited. For example, there may be used silica having an average particle diameter within the range of 0.1 to 30 µm as measured by a laser diffraction scattering method or the like.

Moreover, the cured epoxy resin may contain other ingredients such as various types of additives including inorganic fillers other than silica and flame retardants such as aluminum hydroxide.

The subject of the present invention is not particularly limited as long as it is a cured epoxy resin containing silica. The subject includes not only molded articles made of a cured epoxy resin containing silica but also metal-containing products in which a cured epoxy resin containing silica is integrated with metals such as noble metals, rare metals, or other metals. Examples of the metal-containing products include electronic components mounted on printed circuit boards to be incorporated into computer peripheral units, electronic instruments, communication instruments, medical instruments, and the like. Metal-containing products also include waste products such as used products. The wording that a cured epoxy resin and a metal are integrated with each other means, for example, that the whole or part of the metal is coated or encapsulated with the cured epoxy resin or the whole or part of the metal is bonded to the cured epoxy resin via or without an adhesive or the like.

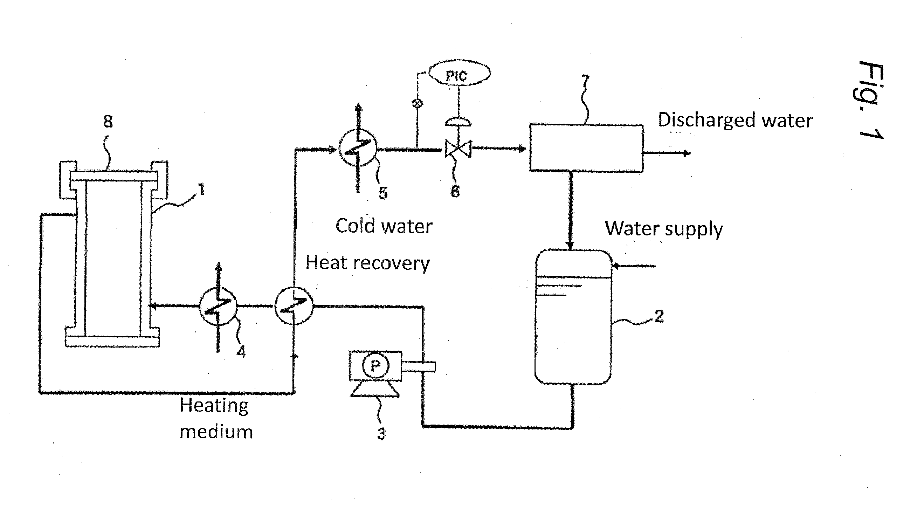

The subcritical water treatment in the method for decomposing a cured epoxy resin may be carried out, for example, in a decomposition treatment tank. Fig. 1 is a schematic diagram of a process flow illustrating one example of subcritical water treatment, and subcritical water treatment of a cured epoxy resin is described below with reference to Fig. 1.

When performing the subcritical water treatment of a cured epoxy resin, first, a prescribed amount of a cured epoxy resin to be treated is charged into a decomposition treatment tank 1.

The decomposition treatment tank 1 is a pressure vessel having a lid 8 and preferably has a mechanism to rapidly open and close a lid provided in JIS or the like, the mechanism being able to work so that the lid 8 can freely open and close rapidly. Although the lid 8 may be opened and closed by a bolt tightening and loosening system, the lid 8 is preferably opened and closed by a mechanism to rapidly open and close a lid in terms of the workability with a large-scale industrial apparatus.

The subcritical water treatment of Fig. 1 is a continuous treatment. Water from a water storage tank 2 is pressured with a pump 3 and heated in a heat exchanger 4 while being subjected to heat exchange with a heat medium, and the pressured hot water is fed to a decomposition treatment tank 1. In the decomposition treatment tank 1, a cured epoxy resin and pressured hot water come into contact together, so that the subcritical water treatment of the cured epoxy resin is performed. The hot water discharged from the decomposition treatment tank 1 is cooled while being subjected to heat exchange with water fed from the water storage tank 2 to the decomposition treatment tank 1 and cooled in a heat exchanger 5 while being subjected to heat exchange with cold water, and then reduced in pressure through a pressure regulation valve 6. Since the water having been reduced in pressure may contain an organic substance or an inorganic substance, the water is subjected to water treatment such as removal of an organic substance or an inorganic substance with a water circulation-drainage unit 7, and then most of the water is fed into the water storage tank 2 to be circulated and used, and a portion thereof is discharged. In shortage of the water within the water storage tank 2, water is supplemented from outside as the occasion demands.

Although the subcritical water treatment may be performed under continuous pass of pressured hot water into the decomposition treatment tank 1, it may be performed by stopping the supply of pressured hot water after having the water pass through for a certain period of time, and then holding the pressured hot water within the decomposition treatment tank 1. In this embodiment, since a heat source necessary for the decomposition of a cured epoxy resin is supplied from the pressured hot water, it is desirable that the decomposition treatment tank 1 be a heat insulating vessel.

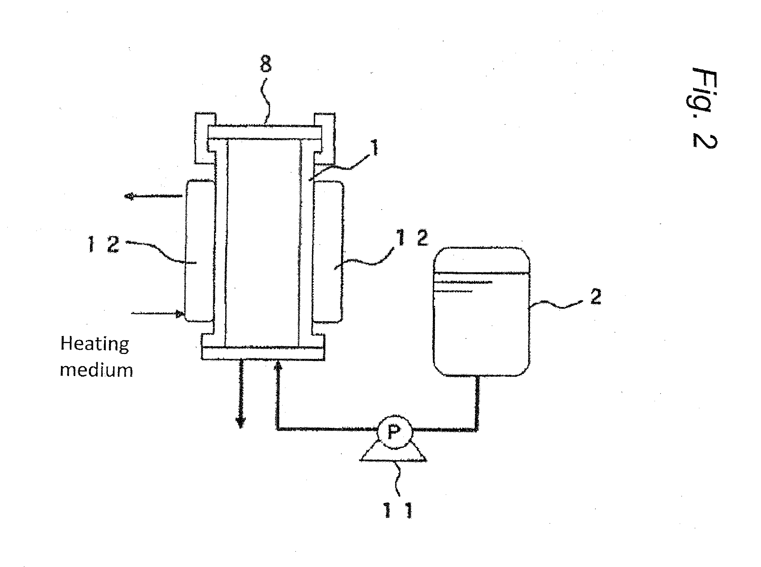

The subcritical water treatment may also be performed by batch system treatment as illustrated in Fig. 2. In this system, water in the water storage tank 2 is fed with a pump 11 into the decomposition treatment tank 1, and the water fed into the decomposition treatment tank 1 is pressured up to a prescribed pressure and heated up to a prescribed temperature with a heat medium circulating within a jacket 12 disposed around the decomposition treatment tank 1. In the decomposition treatment tank 1, a cured epoxy resin and pressured hot water come into contact together as in the continuous treatment of Fig. 1, so that subcritical water treatment of the cured epoxy resin is carried out.

An alkaline compound is included in the water to be fed into the decomposition treatment tank 1. The alkaline compound is an alkaline metal salt or an alkaline metal hydroxide, and a cured epoxy resin is subjected to subcritical water treatment while including one or both of them in water.

By the inclusion of an alkaline compound, it is possible to dissolve silica contained in a cured epoxy resin during the subcritical water treatment. Moreover, it is also possible to advance a hydrolysis reaction of the resin component of the cured epoxy resin effectively and thereby depolymerizing the resin component. As described above, the cured epoxy resin is decomposed by the action of the dissolution of silica contained in the cured epoxy resin, the depolymerization of the resin component of the cured epoxy resin, or both. Inorganic fillers other than silica contained in the cured epoxy resin, additives, and the like may a!so be dissolved. For example, aluminum hydroxide incorporated as a flame retardant may be dissolved during the subcritical water treatment.

The dissolution reaction of silica during the subcritical water treatment with the inclusion of an alkaline compound is supposed to follow the reaction formula given below. The formula is a supposed reaction formula in the case of using sodium hydroxide as an alkaline compound.

SiO₂ + 2NaOH → Na₂SiO₃ (sodium silicate) + H₂O

The amount of the alkaline compound added is preferably not less than 0.2 parts by weight per 1 part by weight of the cured epoxy resin. By the addition of an alkaline compound in such a proportion, it is possible to decompose the cured epoxy resin efficiently, for example, it is possible to dissolve silica effectively, or depolymerize the resin component of the cured epoxy resin effectively. The larger the amount of the alkaline compound added is, the better it is, and the alkaline compound may be added up to about 100 parts by weight per 1 part by weight of the cured epoxy resin. Preferably, the upper limit of that amount may be set at 70 parts by weight per 1 part by weight of the cured epoxy resin in consideration of waste fluid treatment and so on. Accordingly, the amount of the alkaline compound added is preferably adjusted to, for example, 0.2 to 70 parts by weight per 1 part by weight of the cured epoxy resin. From the standpoint of decomposing the cured epoxy resin more effectively, it is desirable that the amount of the alkaline compound added be especially in a proportion of 0.38 to 70 parts by weight per 1 part by weight of the cured epoxy resin.

Specific examples of the alkaline metal salt include calcium carbonate, barium carbonate, and magnesium carbonate. Examples of the alkaline metal hydroxide include sodium hydroxide and potassium hydroxide. Taking together the solubility of silica contained in the cured epoxy resin, the depolymerization, the availability, and the handleability of the resin component, and so on, sodium hydroxide or potassium hydroxide can be mentioned as preferred one out of these alkaline compounds.

The pressured hot water in the decomposition treatment tank 1 of Fig. 1 or Fig. 2 is in a subcritical state. The lower limit of the range of the temperature that the pressured hot water may have is 200°C. When the temperature of the pressured hot water is 200°C or higher, the cured epoxy resin can be decomposed efficiently. In order to decompose the cured epoxy resin more efficiently, it is desirable that the temperature be 260°C or higher, especially 280°C or higher. Although the upper limit of the temperature of the pressured hot water is 350°C in consideration of, for example, the decomposition temperature of a resin, it may be adjusted to 300°C in consideration of energy cost or the like. Thus, a desirable range may be set at 260°C to 300°C, and the optimum range may be 280°C to 300°C. The pressure is, for example, about 2 to about 15 MPa. The reaction time may be set at about 2 hours to about 15 hours.

The subcritical water treatment may be performed by adding water in an amount of 1 part by weight or more per 1 part by weight of the cured epoxy resin. The addition of water in such a proportion allows the cured epoxy resin to be decomposed efficiently. The larger the amount of the water added is, the better it is, and the water may be added, for example, up to about 1500 parts by weight per 1 part by weight of the cured epoxy resin. In consideration to the throughput of a decomposition treatment tank, the treatment of a waste liquid, and so on, the upper limit of that amount may preferably be set at 1300 parts by weight per 1 part by weight of the cured epoxy resin. Accordingly, it is preferable to perform the subcritical water treatment by, for example, adding water in a proportion of 1 to 1300 parts by weight per 1 part by weight of the cured epoxy resin. From the standpoint of decomposing a cured epoxy resin more effectively, it is desirable to add water in a proportion of 5 to 1300 parts by weight per 1 part by weight of the cured epoxy resin at the subcritical water treatment, and it is particularly desirable to add water in a proportion of 8 to 1300 parts by weight.

After the subcritical water treatment, the inside of the decomposition treatment tank 1 is cooled down to normal temperature to about 80°C by reducing the pressure and passing cold water. The decomposition treatment tank 1 may also be allowed to cool naturally. After reducing the pressure and cooling, the lid 8 of the decomposition treatment tank 1 is opened and the decomposition product derived from the cured epoxy resin is recovered.

By treating a cured epoxy resin with subcritical water including an alkaline compound, it is possible to decompose the cured epoxy resin efficiently by the action of the dissolution of silica contained in the cured epoxy resin, the depolymerization of the resin component of the cured epoxy resin, or both.

The next is a description about the method of applying the present invention to a metal-containing product, such as an electronic component.

A printed board installed in a used electrical appliance has electronic components containing various valuable metals mounted, and a technique to not only remove an encapsulating resin but also recover valuable metals contained in such electronic components has recently been needed.

The recovery techniques that have been reported to date include a technique to recover valuable inorganic component materials by oxidatively decomposing resin components by treating an electronic component with supercritical water (for example, JP-A-2002-233847). Another example is a technique to recover a metal component from a plastic molded article using the metal component by decomposing resin components by the use of ammonia or an aqueous ammonia solution under heating and pressure (for example, JP-A-2010-150297).

However, since the former recovery technique uses supercritical water, which has very high pressure and strong oxidative power, the technique has problems such as that treatment conditions are severe and excessive energy is required and that the material of an apparatus for performing decomposition under such treatment conditions is limited and results in a very high facility cost. The latter recovery technique has operational problems such as emission of a strong irritating odor because of the use of ammonia or an aqueous ammonia solution.

An epoxy resin has long been chosen as a thermosetting resin to be used as an encapsulating resin for electronic components in terms of heat resistance, low hygroscopicity, mechanical strength, insulation properties, and the like, and it is common to incorporate silica as an inorganic filler. However, regarding conventional recovery techniques to recover a metal by decomposing resin components, techniques to recover a metal efficiently from metal-containing products in which the metal is encapsulated with a cured epoxy resin containing silica as an inorganic filler have not been studied very much. For example, since both the recovery techniques described above are techniques to decompose only resin components, in recovering a metal from a metal-containing product, it is necessary to recover the metal by executing a step of separating silica and the metal after decomposing resin components by performing prescribed decomposition treatment.

By the application of the present invention to electronic components, it is possible to recover valuable metals efficiently.

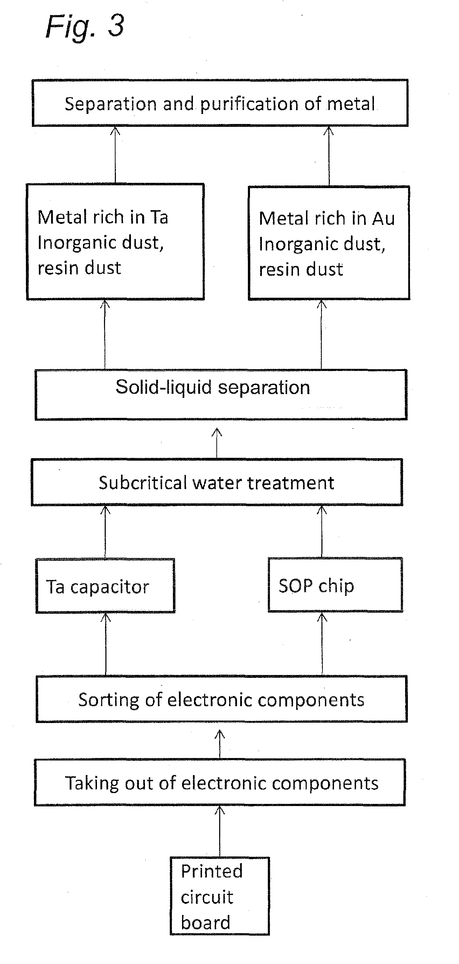

Fig. 3 illustrates one example of the application of the present invention to electronic components; first, an electronic component (metal-containing product) with a printed circuit board taken out from an electronic instrument such as a flat television by manual dismantling or the like is detached by using a simple machine tool, a jig, or the like. Then, electronic components are sorted according to their size and the type of metal contained by such a method as specific gravity, sieve, and magnetic force.

The sorting of electronic components is not essential and the subsequent subcritical water treatment may be carried out in a combination of various electronic components without performing such sorting. Since the type of metal contained in an electronic component varies depending upon the type of the electronic component, it is preferable to sort electronic components metal by the metal contained because the recovery of a target metal thereby becomes easier. In Fig. 3, sorting is done into a Ta capacitor and a SOP chip. Since the Ta capacitor contains a metal rich in Ta and the SOP chip contains a metal rich in Au, separation into the Ta capacitor and the SOP chip makes it possible to recover a metal mass rich in Ta and a metal mass rich in Au from the respective components.

Next, electronic components are treated with subcritical water. In performing subcritical water treatment, first, a prescribed amount of an electronic component to be treated is put into a basket having a bottom made of a sintered filter, and the basket is put into a decomposition treatment tank 1.

Subsequently, subcritical water treatment is conducted according to the procedures described previously.

The decomposition reaction of the cured epoxy resin in the electronic component is advanced by the subcritical water treatment. As the decomposition reaction progresses, a cured epoxy resin delaminates from the metal or a part thereof dissolves in water, so that the cured epoxy resin is removed from the electronic component and the metal is separated efficiently. Also in the case where a cured epoxy resin is bonded to a metal by an adhesive, it is possible to remove the cured epoxy resin and the adhesive from the metal by losing the function as an adhesive through the subcritical water treatment.

After the subcritical water treatment, the basket is taken out of the decomposition treatment tank 1 after reducing the pressure and cooling and thereby the decomposition liquid in the decomposition treatment tank 1 and the solid in the basket are separated from each other. The solid in the basket is a metal resulting from the removal of a cured epoxy resin from the electronic component. The solid may contain inorganic dust such as undissolved silica or resin dust such as undecomposed resin components. In the event that a filler other than silica is contained in the cured epoxy resin in the electronic component, the filler may be contained as inorganic dust in the solid. For example, in the example depicted in Fig. 3, a Ta capacitor is subjected to subcritical water treatment, and then inorganic dust such as a filler and resin dust are recovered together with a metal mass rich in Ta containing Ta and other metals. After subjecting a SOP chip to subcritical water treatment, inorganic dust such as a filler and resin dust are recovered together with a metal mass rich in Au containing Au and other metals.

In the basket, the electronic component may remain with the cured epoxy resin not having been separated from a metal. Since the cured epoxy resin has been made delaminable from a metal by the subcritical water treatment, the metal can be recovered by delaminating the cured epoxy resin with a tool such as a spatula or running water. Although the recovered matter after subcritical water treatment can be recovered as it is in the form of a valuable metal concentrate, a recovered matter from a Ta capacitor can be separated into a metal mass rich in Ta containing Ta and other metals and inorganic dust or resin dust by, for example, gravity separation as shown in Fig. 3. In the case of a recovered matter from a SOP chip, it is possible to separate a metal mass rich in Au containing Au and other metals from inorganic dust or resin dust by gravity separation. Besides the gravity separation, a known method using, for example, magnetic force or an eddy current can also achieve the separation. The separated metal mass may be subjected to separation and purification of a metal by electrolytic refining, solvent extraction, or other methods and thereby a desired metal such as Ta or Au can be isolated. The valuable metal concentrate and the isolated metal can be reused as a valuable material.

As described above, also for metal-containing products, a metal can be recovered even not under severe conditions of a supercritical state by the use of the present invention. Moreover, no operational problems such as emission of an irritating odor arise because of no use of ammonia, ammonia water, or the like. Moreover, according to the present invention, since silica in a cured epoxy resin can be dissolved by subcritical water treatment, it is possible to recover a metal without separating silica from the metal after the subcritical water treatment.

### EXAMPLES

Examples of the present invention are given below, but the invention is not limited thereto.

### <Examples 1 to 6, Comparative Example 1>

A Ta capacitor (3 mm × 5 mm × 2.5 mm) encapsulated with a cured epoxy resin A was detached from a printed circuit board. Subsequently, 20 pieces of Ta capacitor were put into a batch type SUS316 decomposition treatment tank (internal volume 21 cm³) and about 16 g of 1.2 mol/L NaOH water was fed thereinto, and then subcritical water treatment was carried out. The amount of the NaOH water added was 260 parts by weight per 1 part by weight of the cured epoxy resin, and the amount of NaOH added was 13 parts by weight per 1 part by weight of the cured epoxy resin. The pressure used in subcritical water treatment was the saturation vapor pressure at the temperature at that time. The amount of water added was 247 parts by weight per 1 part by weight of the cured epoxy resin.

Subcritical water treatment was carried out under the conditions given in Table 1 and the degree of the decomposition of a cured epoxy resin was evaluated according to the degree of the susceptibility to delamination of the cured epoxy resin from the metal contained in the Ta capacitor.

The case where the resin component contained in a cured epoxy resin was decomposed (comminuted) completely to delaminate successfully from a metal or where a cured epoxy resin was delaminated successfully with running water was evaluated as "⊙." On the other hand, the case where a cured epoxy resin was delaminated successfully by lightly scratching with a spatula or the like was evaluated as "○," the case where a cured epoxy resin was delaminated successfully by scratching with tweezers under the application of force was evaluated as "Δ," and the case where a cured epoxy resin was not delaminated successfully was evaluated as "×." The degree of the decomposition of a cured epoxy resin becomes smaller in the order of "⊙", "○", "Δ", and "×", and "⊙" means that a cured epoxy resin is decomposed most successfully.

The following materials were used for the cured epoxy resin A.

### Epoxy resin: bisphenol A

### Curing agent: phenol novolac resin

Inorganic filler: silica (The blending quantity of silica in the whole amount of the cured epoxy resin is 76.9% by weight.)

**[Table 1]**

| | Example 1 | Example 2 | | Example 3 | | Example 4 | Example 5 | Example 6 | Comparative Example 1 |
|---|---|---|---|---|---|---|---|---|---|
| Temperature and pressure of subcritical water treatment | 200°C, 1.55 MPa | 230°C, 2.8 MPa | | 260°C, 4.7 MPa | | 280°C, 6.4 MPa | 300°C, 8.6 MPa | 350°C, 16.53 MPa | 280°C, 6.4 MPa |
| Treatment time | 6 h | 4 h | 6 h | 4 h | 6 h | 4 h | 2 h | 2 h | 4 h |
| Type of alkaline compound | NaOH | NaOH | NaOH | NaOH | NaOH | NaOH | NaOH | NaOH | No alkaline compound |
| Degree of susceptibility to delamination of cured epoxy resin | Δ | Δ | Δ | ○ | ⊙ | ⊙ | ⊙ | ⊙ | × |

The decomposition rate of the cured epoxy resin A after performing subcritical water treatment under the conditions of 280°C, 6.4 MPa, and 4 hours (Example 4) was calculated to be 76.9%. The dissolution rate of the epoxy resin component of the cured epoxy resin A was 82.3% and the dissolution rate of silica was 77.4%.

The decomposition rate of the cured epoxy resin A, the dissolution rate of the epoxy resin component, and the dissolution rate of silica were calculated by the following methods. After completion of the subcritical water treatment, the decomposition liquid was separated into solid and liquid, and an aqueous solution in which the epoxy resin, an organic substance derived from the curing agent, and silica had been dissolved was recovered as a filtrate. The organic substance dissolved in the filtrate was extracted with diethyl ether and the weight of the organic substance in the filtrate was calculated, and then the decomposition rate of the cured epoxy resin and the dissolution rate of the epoxy resin component were determined. The concentration of Si in the filtrate was analyzed by ICP-AES and was used as an index for the calculation of the dissolution rate of silica.

According to Table 1, the cured epoxy resin was decomposed efficiently by treating it with subcritical water of 200°C to 350°C as in Examples 1 to 6. It was confirmed that by treating with subcritical water especially of 260°C to 300°C, more especially of 280°C to 300°C, the cured epoxy resin was capable of being delaminated from a metal easily and the cured epoxy resin was decomposed well.

In the event that subcritical water treatment was performed with no inclusion of an alkaline compound as in Comparative Example 1, it was confirmed that the cured epoxy resin was not delaminated from a metal and the cured epoxy resin was not decomposed well.

Also in the event that subcritical water treatment was performed with KOH water instead of NaOH water in Examples 1 to 6, it was confirmed that results like those of Examples 1 to 6 were obtained successfully.

### <Example 7>

Subcritical water treatment was performed in the same manner as in Example 4 except for using 2 g of a cured epoxy resin B (having a size of less than 2 mm) having been used as an encapsulant for electronic components instead of 20 pieces of the Ta capacitor in Example 4. The decomposition rate of the cured epoxy resin was 48.3%, the dissolution rate of the epoxy resin component was 5.2%, and the dissolution rate of silica was 62.6%. Subcritical water treatment was performed also for the cured epoxy resin C like the cured epoxy resin B, which resulted in that the decomposition rate of the cured epoxy resin was 92.1%, the dissolution rate of the epoxy resin component was 94.7%, and the dissolution rate of silica was 88.4%.

As to the ICP-AES analysis of the filtrate of the cured epoxy resin B, the amount of aluminum was also determined in order to calculate the dissolution rate of aluminum hydroxide used for the flame retardant purpose.

The following materials were used for the cured epoxy resin B and the cured epoxy resin C.

### • Cured epoxy resin B

Epoxy resin: cresol novolac type epoxy resin
Curing agent: phenol novolac resin
Inorganic filler: silica (The blending quantity of silica in the whole amount of the cured epoxy resin is 64% by weight.)
Flame retardant: aluminum hydroxide

### • Cured epoxy resin C

Epoxy resin: bisphenol A type epoxy resin
Curing agent: acid anhydride
Inorganic filler: silica (The blending quantity of silica in the whole amount of the cured epoxy resin is 40% by weight.)

### <Example 8>

Subcritical water treatment was performed in the same manner as in Example 4 except for varying the amount of NaOH added to 0.1, 0.2, and 0.4 relative to the weight of the cured epoxy resin contained in 20 pieces of Ta capacitor in Example 4. The degree of the delamination of the Ta capacitor resin at the respective amounts of NaOH added is shown in Table 2.

### <Example 9>

Subcritical water treatment was performed in the same manner as in Example 8 except for using cured epoxy resins D to F used as an encapsulant for electronic components instead of 20 pieces of the Ta capacitor in Example 8. The decomposition rate of the cured epoxy resin at the respective amounts of NaOH added is shown in Table 2.

**[Table 2]**

| | Example 8 | Example 9 | | |
|---|---|---|---|---|
| Amount of NaOH added | Susceptibility to delamination of Ta capacitor resin | Cured product A Resin 5 % Silica 86 % | Cured product B Resin 8 % Silica 77 % | Cured product C Resin 20 % Silica 68 % |
| 0.1 | × | 12 % | 16 % | 17 % |
| 0.2 | Δ | 27 % | 30 % | 35 % |
| 0.4 | ○ | 62 % | 67 % | 75 % |

With the increase in the amount of NaOH added, the Ta capacitor resin becomes more susceptible to delamination and the decomposition rate of the cured product increased.

When the amount of NaOH added was the same, the smaller the content of silica in a cured resin was (i.e., the larger the resin content was), the larger the decomposition rate was. Thus, it was confirmed successfully that efficient decomposition of a cured epoxy resin can be performed by the addition of NaOH in an amount of 0.2 parts by weight or more, more preferably 0.4 parts by weight or more based on the cured resin for various resins differing in the blending rates of resin and silica.

Cured epoxy resins D to F were composite materials composed of the materials given below.

### • Cured epoxy resin D

Epoxy resin: cresol novolac type and dicyclopentadiene type epoxy resins
Curing agent: phenol novolac resin
Inorganic filler: silica (The blending quantity of silica in the whole amount of the cured epoxy resin is 86% by weight.)
Flame retardant: magnesium hydroxide

### • Cured epoxy resin E

Epoxy resin: cresol novolac type epoxy resin
Curing agent: phenol novolac resin
Inorganic filler: silica (The blending quantity of silica in the whole amount of the cured epoxy resin is 77% by weight.)
Flame retardant: magnesium hydroxide

### • Cured epoxy resin F

Epoxy resin: cresol novolac type epoxy resin
Curing agent: phenol novolac resin
Inorganic filler: silica (The blending quantity of silica in the whole amount of the cured epoxy resin is 68% by weight.)
Flame retardant: antimony oxide

### <Examples 10 to 15, Comparative Example 2>

A printed circuit board was taken out from a flat television, and a Ta capacitor (3 mm × 5 mm × 2.5 mm) and a SOP chip (15 mm × 28 mm × 2 mm) encapsulated with a cured epoxy resin were detached from the printed circuit board. Subsequently, one piece or two pieces of each electronic components were put into a batch type SUS316 decomposition treatment tank (internal volume 21 cm³) and about 16 g of 1.2 mol/L NaOH water was fed thereinto, and then subcritical water treatment was carried out. The amount of the NaOH water added was 1300 parts by weight per 1 part by weight of the cured epoxy resin, and the amount of NaOH added was 63 parts by weight per 1 part by weight of the cured epoxy resin. The pressure used in subcritical water treatment was the saturation vapor pressure at the temperature at that time. The amount of water added was 1237 parts by weight per 1 part by weight of the cured epoxy resin.

The subcritical water treatment was performed under the conditions given in Table 3, and the degree of the susceptibility to delamination of a cured epoxy resin from the metal contained in each electronic component was evaluated in the same manner as in Examples 1 to 6.

**[Table 3]**

| | Example 10 | Example 11 | | Example 12 | | Example 13 | Example 14 | Example 15 | Comparative Example 2 |
|---|---|---|---|---|---|---|---|---|---|
| Temperature and pressure of subcritical water treatment | 200°C, 1.55 MPa | 230°C, 2.8 MPa | | 260°C, 4.7 MPa | | 280°C, 6.4 MPa | 300°C, 8.6 MPa | 350°C, 16.53 MPa | 280°C, 6.4 MPa |
| Treatment time | 6 h | 4 h | 6 h | 4 h | 6 h | 4 h | 2 h | 2 h | 4 h |
| Type of alkaline compound | NaOH | NaOH | NaOH | NaOH | NaOH | NaOH | NaOH | NaOH | No alkaline compound |
| Ta capacitor | Δ | Δ | Δ | ○ | ⊙ | ⊙ | ⊙ | ⊙ | × |
| SOP chip | Δ | Δ | Δ | ○ | ⊙ | ⊙ | ⊙ | ⊙ | × |

According to Table 3, the cured epoxy resin was delaminated from the metal by treating it with subcritical water of 200°C to 350°C as in Examples 10 to 15, a metal mass rich in Ta was recovered from the Ta capacitors, and a metal mass rich in Au was recovered from the SOP chips. By treating with subcritical water especially of 260°C to 300°C, more especially of 280°C to 300°C, the cured epoxy resin was delaminated from the metal easily and the desired metal was recovered efficiently.

In the event that subcritical water treatment was performed with no inclusion of an alkaline compound as in Comparative Example 2, the cured epoxy resin was not delaminated from the metal and the desired metal was not recovered from the electronic component.

Also in the event that subcritical water treatment was performed with KOH water instead of NaOH water in Examples 10 to 15, it was confirmed that results like those of Examples 10 to 15 were obtained successfully.

## Claims

1. A method for decomposing a cured epoxy resin, the method comprising: bringing a cured epoxy resin containing silica into contact with subcritical water to decompose the resin, the subcritical water including at least one alkaline compound selected from an alkaline metal salt and an alkaline mental hydroxide.

2. The method for decomposing a cured epoxy resin of claim 1, wherein the amount of the alkaline compound added is 0.2 parts by weight or more relative to 1 part by weight of the cured epoxy resin.

3. The method for decomposing a cured epoxy resin of claim 1 or 2, wherein the alkaline metal hydroxide is sodium hydroxide or potassium hydroxide.

4. The method for decomposing a cured epoxy resin of any one of claims 1 to 3, wherein the cured epoxy resin is brought into contact with subcritical water of 200 to 350°C.

5. The method for decomposing a cured epoxy resin of any one of claims 1 to 4, wherein the duration of the contact of the cured epoxy resin to subcritical water is 2 to 6 hours.

## Amended claims

### Amended claims under Art. 19.1 PCT

1. A method for recovering a metal from a metal-containing product that the metal is encapsulated with a cured epoxy resin containing silica,
the method comprising: bringing the cured epoxy resin containing silica into contact with subcritical water to decompose the resin, the subcritical water including an alkaline metal hydroxide as an alkaline compound.

2. The method for recovering a metal from a metal-containing product of claim 1, wherein the amount of the alkaline compound added is 0.2 parts by weight or more relative to 1 part by weight of the cured epoxy resin.

3. The method for recovering a metal from a metal-containing product of claim 1 or 2, wherein the alkaline metal hydroxide is sodium hydroxide or potassium hydroxide.

4. The method for recovering a metal from a metal-containing product of any one of claims 1 to 3, wherein the cured epoxy resin is brought into contact with subcritical water of 200 to 350°C.

5. The method for recovering a metal from a metal-containing product of any one of claims 1 to 4, wherein the duration of the contact of the cured epoxy resin to subcritical water is 2 to 6 hours.

Statement under Art. 19.1 PCT

Basis for the amendment
   (1) Claim 1 has been amended by adding the description of "A method for recovering a metal from a metal-containing product that the metal is encapsulated with a cured epoxy resin containing silica". The basis for this amendment can be found in paragraph [0038] in the specification as filed. Due to this amendment, the description of "A method for decomposing a cured epoxy resin" in claim 1 was changed to "A method for recovering a metal from a metal-containing product". Furthermore, "at least one alkaline compound selected from an alkaline metal salt and an alkaline metal hydroxide" in claim 1 was amended to "an alkaline metal hydroxides as an alkaline compound".
   (2) Claim 2 has been amended by changing the description of "A method for decomposing a cured epoxy resin" to "A method for recovering a metal from a metal-containing product".
   (3) Claim 3 has been amended by changing the description of "A method for decomposing a cured epoxy resin" to "A method for recovering a metal from a metal-containing product".
   (4) Claim 4 has been amended by changing the description of "A method for decomposing a cured epoxy resin" to "A method for recovering a metal from a metal-containing product".
   (5) Claim 5 has been amended by changing the description of "A method for decomposing a cured epoxy resin" to "A method for recovering a metal from a metal-containing product".
Comment
   The cited reference 1(JP2010-144101) does not disclose the method for recovering a metal from a metal-containing product that the metal is encapsulated with a cured epoxy resin. Accordingly, the present invention is novel and inventive.
